# EUROPÄISCHE PATENTANMELDUNG

(11) **EP 4 607 730 A1**
(43) Veröffentlichungstag der Anmeldung: **27.08.2025**
(21) Anmeldenummer: 24159375.5
(22) Anmeldetag: 23.02.2024
(51) Int. Cl.: H02H 3/16, H02M 3/155, H02M 1/32, H02M 7/04

(54) **TRAFOLOSER UMRICHTER MIT SCHUTZ VOR ERDSCHLUSSFEHLERN**

(71) Anmelder: FRONIUS INTERNATIONAL GmbH, 4643 Pettenbach (AT)
(72) Erfinder: Nagelmüller, Martin, 4643 Pettenbach (AT)
(74) Vertreter: Patentanwälte Pinter & Weiss OG

(57) **Zusammenfassung**

Um einen trafolosen Umrichter (1) vor den Auswirkungen eines Erdschlussfehlers (10) wirksam schützen zu können, ist vorgesehen, dass in einer Verbindungsleitung (V+, V-) des Umrichters (1), die einen Zwischenkreisanschlusspol (ZK+, ZK-) des Gleichspannungszwischenkreises (6) mit einem DC-Anschlusspol (DC+, DC-) des DC-Anschlusses (3) verbindet, ein weiterer unidirektional leitender Halbleiterschalter (T1, T2) vorgesehen ist, der die Verbindungleitung (V+, V-) bei offenem weiteren unidirektional leitenden Halbleiterschalter (T1, T2) unterbricht und bei geschlossenem weiteren unidirektional leitenden Halbleiterschalter (T1, T2) in einer ersten Stromflussrichtung vom AC-Anschluss (2) zum DC-Anschluss (3) leitend durchschaltet und entgegen der ersten Stromflussrichtung sperrt, wobei parallel zum weiteren Halbleiterschalter (T1, T2) ein unidirektionales Schaltelement (DT1, DT2) geschaltet ist, das in der ersten Stromflussrichtung sperrt und entgegen der ersten Stromflussrichtung leitet.

## Beschreibung

Die gegenständliche Erfindung betrifft einen gegen Erdschlussfehler geschützten Umrichter mit einem DC-Anschluss und einem AC-Anschluss, wobei der AC-Anschluss mit einem AC-Leistungsteil des Umrichters verbunden ist, indem der AC-Leistungsteil zumindest einen Schaltzweig mit zumindest zwei in Serie geschalteten Halbleiterschaltern aufweist, zwischen denen ein elektrischer Pol gebildet ist, der mit dem AC-Anschluss verbunden ist, wobei im Umrichter ein Gleichspannungszwischenkreis mit zumindest einen Zwischenkreiskondensator vorgesehen ist und der Gleichspannungszwischenkreis mit dem AC-Leistungsteil und dem DC-Anschluss verbunden ist. Die Erfindung betrifft auch ein Verfahren zum Schützen eines Umrichters vor Erdschlussfehlern.

Leistungselektronische Umrichter finden in vielen Bereichen Anwendungen. Ein Umrichter kann als Gleichrichter oder als Wechselrichter ausgeführt sein oder betrieben werden. Ein bidirektionaler Umrichter kann beispielsweise sowohl als Gleichrichter (in die eine Energieflussrichtung) und als Wechselrichter (in die andere Energieflussrichtung) betrieben werden. Prominente Beispiele sind Wechselrichter in Photovoltaikanlagen (PV-Anlagen) oder Gleichrichter in Ladegeräten von Elektrofahrzeugen. Ein als Wechselrichter betriebener Umrichter hat in solchen Anwendungen die Aufgabe, eine elektrische Gleichspannung (beispielsweise aus PV-Modulen oder aus einer elektrischen Speicherbatterie) in eine elektrische Wechselspannung (insbesondere eines elektrischen Verteilnetzes) zu wandeln, um elektrische Energie in das elektrische Verteilnetz einzuspeisen. Der als Gleichrichter betriebene Umrichter kann aber auch die Aufgabe haben, elektrische Energie aus einem elektrischen Verteilnetz (also eine Wechselspannung) in eine Gleichspannung zu wandeln, um eine Speicherbatterie, z.B. eines Elektroautos oder einer sogenannten Hybrid-PV-Anlage mit Speicher, zu laden. Umrichter in solchen Anwendungen sind aus Sicherheitsgründen üblicherweise mit einem Transformator ausgeführt, der die AC-Seite (Wechselspannung) des Umrichters von der DC-Seite (Gleichspannung) galvanisch trennt. So kann ein (Fehler-) Gleichstrom einen Transformator nicht "überwinden", da dessen magnetisches Koppelungsprinzip Wechselströme erfordert. Weiters kann mittels galvanischer Trennung das elektrische Referenzpotential der DC-Seite frei gewählt werden, beispielsweise mit Erde als Referenzpotential.

Umrichter ohne Transformator, sogenannte "trafolose" Umrichter, haben den Vorteil, dass gegenüber Umrichtern mit Transformator durch den Wegfall des Transformators Kosten und Bauraum eingespart werden kann und auch der Wirkungsgrad höher ist. Allerdings kann es bei Verwendung eines trafolosen Umrichters im Falle eines spontanen satten Erdschlusses ("bolted earth fault") durch eine entstehende vom AC-Netz getriebene Erdfehlerstromschleife zu schweren Schäden am Umrichter kommen. Als unmittelbarer Folgefehler kann es auch auf der DC-Seite zu schweren Schäden, wie einem Batteriekurzschluss, kommen. Im Falle einer kurzgeschlossenen Batterie können aufgrund von niedrigen Batterie-Innenwiderständen elektrische Fehlerströme im Kiloamperebereich und darüber entstehen, die sogar Personenschäden zur Folge haben können. Aufgrund dessen werden bisher in solchen Anwendungen, insbesondere in Ladegeräten bei Elektrofahrzeugen, keine transformatorlosen Wechselrichter eingesetzt, oder es sind gesonderte Maßnahmen erforderlich, um die Auswirkungen solcher Erdschlussfehler zu unterdrücken. Es wäre denkbar, DC-Sicherungen oder schnellere pyrotechnische Trennelemente ("Pyrofuse") einzusetzen. Solche DC-Sicherungen sind aber schwierig zu dimensionieren, weil deren Auslösezeit stromabhängig ist. Außerdem wären solche Sicherungselemente nach Auslösung mittels Serviceeinsatz zu tauschen, was einen mitunter langen Anlagenausfall nach sich ziehen würde und in vielen Anwendungen unpraktikabel wäre und daher nicht erwünscht ist. Höchstwahrscheinlich würden aber bei satten Erdfehlern trotz DC-Sicherungselementen trotzdem zumindest der AC-Leistungsteil des Wechselrichters beschädigt werden.

In Umrichtern ist oftmals ein Überstromschutz implementiert, der einen zulässigen maximalen AC-Strom überwacht. Wird der zulässige AC-Strom erreicht oder überschritten wird der Umrichter abgeschaltet, um Schäden zu verhindern. Ein derartiger Überstromschutz wäre im Erdfehlerfall aber nicht wirksam, weil diese Abschaltung in der Regel nur gegen umrichterinterne Fehlerströme wirksam ist und Erdfehlerströme trotzdem lange genug weiter einwirken können, sodass es trotzdem zu Geräteschäden kommt.

Es besteht daher Bedarf, einen trafolosen Umrichter anzugeben, der die unmittelbaren Folgen von möglichen Erdschlussfehlern von vornherein vermeidet.

Diese Aufgabe wird für einen eingangs genannten Umrichter erfindungsgemäß mit den Merkmalen der unabhängigen Ansprüche gelöst.

Im Erdschlussfehlerfall kann das unidirektionale Schaltelement einfach und vor allem hinreichend schnell aktiviert werden, in dem der weitere unidirektional leitende Halbleiterschalter geöffnet wird. Das unidirektionale Schaltelement unterbricht dann einen möglichen Erdschlussstromkreis im Erdschlussfehlerfall hinreichend schnell und sorgt für den Schutz des Umrichters gegen die Auswirkungen eines Erdschlussfehlers.

Generell ist es denkbar, dass DC-Leitungen im Umrichter baulich bereits hinreichend geschützt sind, z.B. durch verstärkte Isolierung, sodass die erfindungsgemäße Maßnahme zum Schutz gegen die Auswirkungen eines Erdschlussfehlers lediglich für nicht derart geschützte Leitungen erforderlich wäre.

Der erfindungsgemäße Schutz ist besonders vorteilhaft bei bidirektionalen Umrichtern mit möglichem Energiefluss in beiden Richtungen. Die Kombination aus weiterem unidirektional leitenden Halbleiterschalter mit unidirektionalem Schaltelement ermöglicht einen bidirektionalen Betrieb des Umrichters, weil das unidirektionale Schaltelement durch den geschlossenen Halbleiterschalter überbrückt wird.

In einer vorteilhaften Ausgestaltung ist in der positiven Verbindungsleitung und/oder in der negativen Verbindungsleitung ein DC/DC-Wandler geschaltet ist, wobei der DC/DC-Wandler zumindest einen Halbleiterschalter mit einer parallel dazu geschalteten Freilaufdiode umfasst und die Steuereinheit den zumindest einen Halbleiterschalter des jeweiligen DC/DC-Wandlers im Falle eines erkannten Erdschlussfehlers permanent öffnet und die jeweilige Freilaufdiode den Stromfluss sperrt. Damit kann ein eventuell vorhandenes DC-Leistungsteil im Umrichter auch für den Schutz gegen Erdschlussfehler genutzt werden. Ein Halbleiterschalter des DC-Leistungsteils wird im Normalbetrieb in vorgesehener Weise mit einer bestimmten Schaltfrequenz geöffnet und geschlossen. Im Erdschlussfehlerfall wird dieses mit der Schaltfrequenz durchgeführte Öffnen und Schließen unterbrochen und der Halbleiterschalter permanent geöffnet. Der Halbleiterschalter des DC-Leistungsteils wird damit zum weiteren Halbleiterschalter zum Schutz gegen Erdschlussfehler. Die ohnehin zwingend vorhandene Freilaufdiode des Halbleiterschalters des DC-Leistungsteils wird gleichzeitig als unidirektionales Schaltelement zum Schutz gegen Erdschlussfehler verwendet. In einer solchen Ausführung bedarf es keiner zusätzlichen Schaltelemente, wie zusätzlicher Halbleiterschalter oder unidirektionale Schaltelemente, zumindest nicht für diejenige DC-Leitung, in der ein geeigneter DC/DC-Wandler eingefügt ist. Bei einem asymmetrischen DC/DC-Wandler wäre in der zwischen AC Seite und DC Seite durchverbundenen Leitung für einen vollumfassenden Schutz unter Umständen noch eine Kombination aus weiterem unidirektional leitenden Halbleiterschalter und unidirektionalem Schaltelement erforderlich.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 die Problematik eines Erdschlussfehlers in einem trafolosen Umrichter und
Fig.2 und 3 jeweils eine Ausführung eines trafolosen Umrichters mit erfindungsgemäßem Schutz gegen Erdschlussfehler.

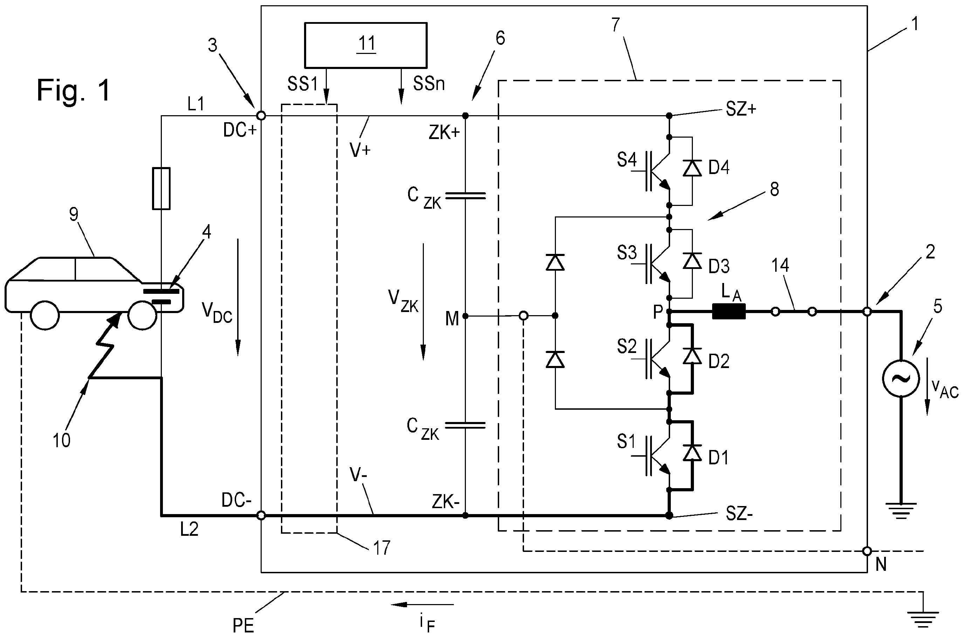

Anhand der Fig.1 soll nachfolgend das Problem eines Erdschlusses bei trafolosen Umrichtern 1 erläutert werden. In einem trafolosen Umrichter 1 gibt es keine galvanische Trennung mittels eines Transformators zwischen der AC-Seite und der DC-Seite des Umrichters 1.

Die Erfindung betrifft Spannungszwischenkreis-Umrichter, also Umrichter mit einem Gleichspannungszwischenkreis. In weitere Folge wird aber anstelle von Spannungszwischenkreis-Umrichter nur mehr der Begriff Umrichter verwendet.

Fig.1 zeigt einen trafolosen Umrichter 1 mit einem Wechselstrom (AC)-Anschluss 2 und einem Gleichstrom (DC)-Anschluss 3. Der DC-Anschluss 3 hat einen positiven DC-Anschlusspol DC+ und einen negativen DC-Anschlusspol DC-. Am DC-Anschluss 3 wird in Verwendung des Umrichters 1 über den positiven DC-Anschlusspol DC+ und einer ersten mit dem positiven DC-Anschlusspol DC+ verbundenen Leitung L1 und über den negativen DC-Anschlusspol DC- und einer zweiten mit dem negativen DC-Anschlusspol DCverbundenen Leitung L2 eine DC-Komponente 4 angeschlossen. In einer Leitung L1, L2 kann auch eine DC-Sicherung angeordnet sein, wie in Fig.1 dargestellt. Die DC-Komponente 4 kann eine DC-Quelle sein, wie eine elektrische Speicherbatterie oder eine PV-Anlage, oder eine DC-Senke, wie eine elektrische Speicherbatterie. Im Ausführungsbeispiel der Fig.1 ist die Speicherbatterie eine Batterie eines Fahrzeugs 9. Im Falle eines bidirektionalen Umrichters 1 kann auch zwischen einer DC-Quelle und DC-Senke gewechselt werden. Am DC-Anschluss 3 liegt im Betrieb eine DC-Spannung V_{DC} an. Am AC-Anschluss 2 ist in Verwendung des Umrichters 1 ein AC-Netz 5, wie ein elektrisches Versorgungsnetz, mit einer AC-Spannung v_{AC}, angeschlossen. Der Umrichter 1 ermöglicht damit einen elektrischen Energiefluss von der DC-Seite zur AC-Seite oder umgekehrt. Bei einem bidirektionalen Umrichter 1 sind beide Energieflussrichtungen möglich.

In Fig.1 ist auch ein optionales AC-seitiges Trennelement 14, wie ein AC-Relais oder Schalter, in geschlossenem Zustand dargestellt, mit dem der Umrichter 1 bedarfsweise vom AC-Netz 5 getrennt werden kann, beispielsweise durch entsprechende Ansteuerung des Trennelements 14 von der Steuereinheit 11 des Umrichters 1.

Details hinlänglich bekannter und optional vorgesehener weiterer Schaltungskomponenten eines Umrichters 1, wie ein Eingangsfilter, ein Ausgangsfilter oder ein DC-seitiges Trennelement, sind in Fig.1 nicht dargestellt, weil für die Erfindung nicht von Bedeutung.

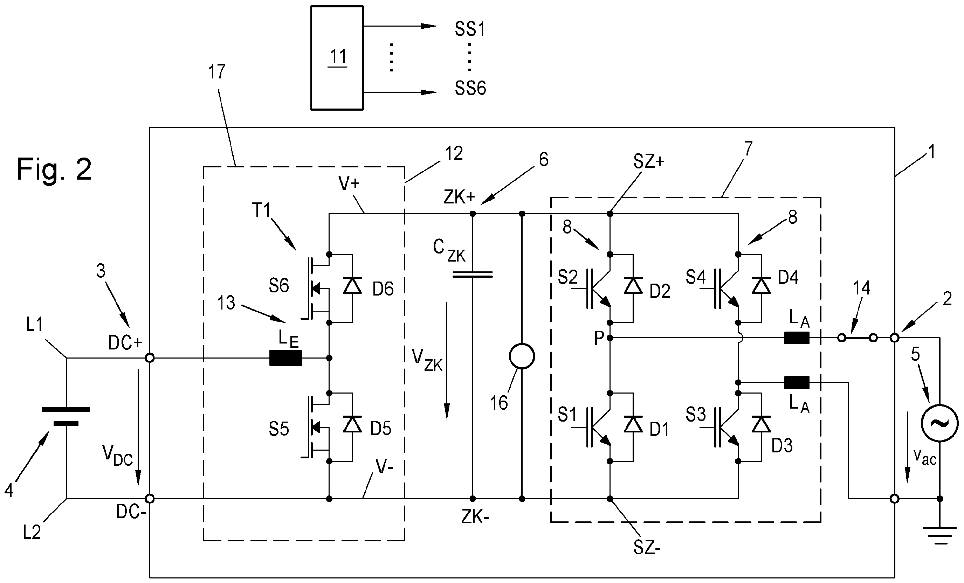

Ein Umrichter 1 hat einen Gleichspannungszwischenkreis 6 mit zumindest einem Zwischenkreiskondensator C_{ZK} zwischen einem positiven Zwischenkreisanschlusspol ZK+ und einem negativen Zwischenkreisanschlusspol ZK-. Der Gleichspannungszwischenkreis 6 ist über eine positive Verbindungsleitung V+ und eine negative Verbindungsleitung V- im Umrichter 1 an den DC-Anschluss 3 geschaltet, sodass am zumindest einen Zwischenkreiskondensator C_{ZK} die am DC-Anschluss 3 anliegende DC-Spannung V_{DC} anliegt. Hierfür ist der positive Anschlusspol DC+ des DC-Anschlusses 3 mit dem positiven Zwischenkreisanschlusspol ZK+ verbunden und der negative Zwischenkreisanschlusspol ZK- mit dem negativen Anschlusspol DC- des DC-Anschlusses 3. Diese Verbindung muss aber nicht zwingend direkt sein, sondern es könnten zwischen dem positiven Zwischenkreisanschlusspol ZK+ und dem positiven Anschlusspol DC+, sowie zwischen dem negativen Zwischenkreisanschlusspol ZK- und dem negativen Anschlusspol DC- weitere Schaltungskomponenten vorgesehen sein, wie beispielsweise in der Ausführung der Fig.2. In gewissen Wechselrichtertopologien können auch mehrere Zwischenkreiskondensatoren C_{ZK} vorgesehen sein, beispielsweise in Serie geschaltet, wie in der Ausgestaltung der Fig.1 mit zwei in Serie geschalteten Zwischenkreiskondensatoren C_{ZK} zwischen den Zwischenkreisanschlusspolen ZK+, ZK-.

Im Falle einer DC-seitigen Schaltungskomponente 17, wie eines DC-seitigen Filters oder eines DC/DC-Wandlers 12, liegt die DC-Spannung V_{DC} am DC-Eingang 3 natürlich nicht direkt am Gleichspannungszwischenkreis 6 an, sondern indirekt über die DC-seitige Schaltungskomponente 17, wie in Fig.1 gestrichelt angedeutet.

Der Umrichter 1 besitzt auch eine Halbleiter-Baugruppe, den sogenannten AC-Leistungsteil 7, der mit dem AC-Anschluss 2 verbunden ist. Der AC-Leistungsteil 7 umfasst pro Phase zumindest einen Schaltzweig 8. Im Schaltzweig 8 sind zumindest zwei in Serie geschaltete Halbleiterschalter S1, ..., Sn, wie IGBT- oder MOSFET-Transistoren, vorgesehen (in Fig.1 n=4), wobei der Schaltzweig 8 parallel an den Gleichspannungszwischenkreis 6 geschaltet ist. Der Schaltzweig 8 hat einen positiven Schaltzweiganschlusspol SZ+, der mit dem positiven Zwischenkreisanschlusspol ZK+ verbunden ist und einen negativen Schaltzweiganschlusspol SZ-, der mit dem negativen Zwischenkreisanschlusspol ZKverbunden ist. Zwischen dem positiven Schaltzweiganschlusspol SZ+ und dem negativen Schaltzweiganschlusspol SZ- sind die Halbleiterschalter S1, ..., Sn des Schaltzweiges 8 geschaltet. Die Leitung zwischen dem positiven Zwischenkreisanschlusspol ZK+ und dem positiven Schaltzweiganschlusspol SZ+ wird ebenfalls noch als Teil der positiven Verbindungsleitung V+ verstanden. Ebenso wird die Leitung zwischen dem negativen Zwischenkreisanschlusspol ZK- und dem negativen Schaltzweiganschlusspol SZ- noch als Teil der negativen Verbindungsleitung V- verstanden. Ein zwischen Halbleiterschaltern S1, ..., Sn des Schaltzweiges 8 vorgesehener elektrischer Pol P ist, üblicherweise über eine Ausgangsdrossel L_{A}, mit dem AC-Anschluss 2 verbunden, und bildet damit eine Phase der AC-Spannung v_{AC} am AC-Anschluss 2. Parallel zu den Halbleiterschaltern S1, ..., Sn sind bekanntermaßen im AC-Leistungsteil 7 stets Freilaufdioden D1, ..., D4 geschaltet, um die Halbleiterschalter S1, ..., Sn gegen Rückwärts-Überspannung zu schützen.

Es gibt Umrichtertopologien, in denen pro Phase mehrere Schaltzweige 8 vorgesehen sind, wobei die Pole P dieser Schaltzweige miteinander und mit dem AC-Anschluss 2 verbunden sind. Solche Umrichtertopologien werden auch als verschachtelte ("interleaved") Umrichtertopologien bezeichnet.

Der Umrichter 1 ist in Fig.1 lediglich zur Erläuterung als einphasiger Umrichter ausgeführt. Der Umrichter 1 kann aber natürlich auch mehr als eine Phase, insbesondere drei Phasen, haben. Bei einem mehrphasigen Umrichter 1 sind entsprechend der Anzahl an Phasen mehrere Schaltzweige 8 vorgesehen und der AC-Anschluss 2 umfasst eine entsprechende Anzahl von Phasenanschlüssen. Das AC-Netz 5 ist demgemäß ebenfalls mehrphasig ausgeführt.

Die DC-Seite des Umrichters 1 ist damit der Bereich zwischen dem DC-Anschluss 3 und dem Gleichspannungszwischenkreis 6, wobei der Gleichspannungszwischenkreis 6 auch als Teil der DC-Seite gesehen werden kann. Die AC-Seite des Umrichters 1 ist damit der Bereich des AC-Leistungsteils 7.

In der Ausführung der Fig.1 ist eine bekannte NPC ("neutral point clamped") Umrichtertopologie gezeigt. In dieser Umrichtertopologie sind pro Schaltzweig 8 zumindest vier Halbleiterschalter S1, S2, S3, S4 in Serie geschaltet. Der Punkt zwischen den beiden oberen Halbleiterschalter S3, S4 und den beiden unteren Halbleiterschaltern S1, S2 ist jeweils über eine Diode (oder einem weiteren Halbleiterschalter) mit einem Mittelpunkt M zwischen den beiden Zwischenkreiskondensatoren C_{ZK} verbunden. Eine solche Umrichtertopologie ermöglicht bekanntermaßen die Erzeugung von mehr als zwei elektrischen Ausgangspotentialen am jeweiligen Pol P.

Allgemein gilt für einen Umrichter 1, dass ein Mittelpunkt M zwischen zwei Zwischenkreiskondensatoren C_{ZK} am Umrichter 1 auch als Neutralpunkt N nach außen geführt sein kann, um daran eine Neutralleitung des AC-Netzes 5 anzuschließen, wie beispielsweise in der Ausführung in Fig.1 gestrichelt angedeutet.

Es sei angemerkt, dass die Umrichtertopologie des trafolosen Umrichters 1 für das grundlegende Problem und auch für die Erfindung aber ohne Bedeutung ist.

Im Betrieb des Umrichters 1 werden die Halbleiterschalter S1, ..., Sn des AC-Leistungsteils 7 in bekannter Weise gemäß bestimmten Vorgaben durch eine Steuereinheit 11 des Umrichters 1 angesteuert und mit einer vorgegebenen Schaltfrequenz geöffnet und geschlossen, um die Zwischenkreisspannung V_{ZK} in die gewünschte AC-Spannung v_{AC} am AC-Anschluss 2 zu wandeln, oder um die AC-Spannung v_{AC} am AC-Anschluss 2 in eine gewünschte DC-Spannung V_{DC} oder Zwischenkreisspannung V_{ZK} zu wandeln. Die Steuereinheit 11 erzeugt hierzu Steuersignale SS1, ..., SSn für alle Halbleiterschalter S1, ..., Sn des AC-Leistungsteils 7, wie in Fig.1 angedeutet. Über die Steuersignale SS1, ..., SSn wird ein Halbleiterschalter S1, ..., Sn entweder geöffnet oder geschlossen, üblicherweise durch einen bekannten Treiberbaustein (nicht dargestellt), wie ein Gate-Driver, der die Steuersignale SS1, ..., SSn empfängt und für die Halbleiterschalter S1, ..., Sn geeignet aufbereitet. Die Schaltfrequenz der Halbleiterschalter S1, ..., Sn eines AC-Leistungsteils 7 eines Umrichters 1 liegt typischerweise in der Größenordnung von 1kHz bis 100kHz.

Im Ausführungsbeispiel der Fig.1 ist der Umrichter 1 beispielsweise in einem bidirektionalen Ladegerät für ein Elektrofahrzeug 9 (was auch ein Hybridfahrzeug umfasst) vorgesehen. Dabei kann es sich um ein Onboard Ladegerät, das im Fahrzeug 9 verbaut ist, handeln, oder auch um ein vom Fahrzeug 9 getrenntes, externes Ladegerät. Das Ladegerät ist an ein AC-Netz 5 angeschlossen, beispielsweise ein einphasiges 50Hz, 230V Wechselspannungsnetz und lädt oder entlädt eine Speicherbatterie des Fahrzeugs 9 als DC-Komponente 4, die über ein Ladekabel (mit den Leitungen L1, L2) mit dem Umrichter 1 verbunden ist. Ein bidirektionales Ladegerät ist beispielsweise erforderlich in Konzepten, in denen die Speicherbatterie des Fahrzeugs 9 auch als elektrische Versorgung, also als DC-Quelle, beispielsweise in einer PV-Inselanlage, verwendet werden soll. Damit kann die Speicherbatterie beispielsweise auch als Energieversorgung eines Hauses verwendet werden, um den Energieautarkiegrad zu erhöhen.

Aufgrund von Sicherheitsvorschriften ist die Fahrzeugkarosserie beim Laden geerdet und damit an einen Erdleiter PE angeschlossen. Im Normalfall ist die Fahrzeugkarosserie elektrisch isoliert von den elektrischen Komponenten des Umrichters 1. In der Darstellung der Fig.1 ist ein satter Erdschlussfehler 10 zwischen der Fahrzeugkarosserie und dem Leistungsstromkreis des Umrichters 1 angenommen. Ein solcher Erdschlussfehler kann beispielsweise durch unsachgemäße Handhabung eines Ladekabels durch einen Benutzer passieren und einer dadurch entstehenden Beschädigung des Ladekabels.

Ein solcher Erdschlussfehler kann aber auch in anderen Anwendungen passieren. Beispielsweise könnte ein Erdschlussfehler auch in einer PV-Anlage in Folge einer Beschädigung eines PV-Moduls, dessen Montagerahmen geerdet sein muss, passieren.

Als Erdschlussfehler 10 wird allgemein ein Fehler verstanden, durch den ein stromführender, normalerweise isolierter Teil des Umrichters 1 oder einer daran angeschlossenen Komponente, wie einer DC-Komponente 4, ungewollt, meistens durch einen Fehler, mit einem Erdleiter PE verbunden wird.

Aufgrund des Erdschlussfehlers 10 bildet sich während der negativen Halbwelle der AC-Spannung v_{AC} am AC-Anschluss 2 selbsttätig ein Erdfehlerstromkreis (in Fig.1 in dicker Linie eingezeichnet), der über die beiden Freilaufdioden D1, D2 des AC-Leistungsteils 7 (die leitend werden), den negativen DC-Anschlusspol DC-, die Leitung L2 und den Erdleiter PE verläuft. Bei einem Erdschlussfehler an der positiven Leitung L1 würde der Erdfehlerstromkreis von einer positiven Halbwelle der AC-Spannung v_{AC} getrieben und der Erdfehlerstromkreis über die beiden anderen Freilaufdioden D3, D4 (die leitend werden), den positiven DC-Anschlusspol DC+, den Leiter L1 und den Erdleiter PE verlaufen. Die Probleme wären aber dieselben.

Ein derartiger Erdfehlerstromkreis ist nicht kontrollierbar, weil kein ausreichend schnell trennendes Schaltelement vorhanden ist, das den Erdfehlerstromkreis unterbricht. Der im Erdfehlerstromkreis fließende elektrische Erdfehlerstrom i_{F} steigt getrieben vom AC-Netz 5 sehr schnell an, wobei die Stromanstiegsgeschwindigkeit lediglich von der Impedanz des Erdfehlerstromkreises, vor allem gegeben durch die Induktivitäten im Umrichter 1 (z.B. Ausgangsdrossel L_{A}) und Leitungsimpedanzbelägen, begrenzt wird.

Allfällig vorhandene Trennelemente 14 des Umrichters 1 benötigen größenordnungsmäßig ca. 10ms um zu öffnen und sind daher zu langsam, um rechtzeitig auf den Anstieg des Erdfehlerstromes i_{F} zu reagieren. Zudem sind herkömmliche DC-Relais oder AC-Relais als Trennelemente 14 nicht Kurzschlußstrom-trennfähig und könnten im Kurzschlussfall unter Umständen nicht erfolgreich abschalten.

Auch eventuell vorhandene DC-Sicherungselemente, wie eine DC-Sicherung oder ein pyrotechnisches Trennelement ("Pyrofuse") in den Leitungen L1, L2 könnten höchstwahrscheinlich nicht verhindern, dass im Falle eines Erdschlussfehlers die Freilaufdioden D1, ..., Dn des AC-Leistungsteils 7 überlastet werden und das AC-Leistungsteil 7 beschädigt wird, weil die Stromanstiegsgeschwindigkeit des Erdfehlerstromes i_{F} zu hoch ist.

Kommt es aufgrund des entstehenden Erdfehlerstromes i_{F} zu einer Überlastung und somit zu einem Defekt der Freilaufdioden D1, D2 oder D3, D4 würden höchstwahrscheinlich weitere Schaltelemente S1, ..., S4 des AC-Leistungsteils 7 in Mitleidenschaft gezogen, da all diese Elemente räumlich oft sehr nahe aneinander gruppiert sind, z.B. in einem Halbleitermodul. Nicht selten entsteht dann als Folgefehler ein Gesamt-Kurzschluss des AC-Leistungsteils 7, der zunächst vom Zwischenkreiskondensator C_{ZK} gespeist wird. Damit wäre nun aber auch die DC-Komponente 4, wie eine elektrische Speicherbatterie, kurzgeschlossen, wodurch im Erdfehlerstromkreis binnen kürzester Zeit Kurzschlussströme im kA-Bereich erzeugt werden würden.

Solche Kurzschlussströme sind nicht nur in der Lage den Umrichter 1, sondern auch die DC-Komponente 4, wie eine Speicherbatterie, nachhaltig zu beschädigen oder gänzlich zu zerstören. Ein weiteres, sogar weit größeres Problem besteht aber darin, dass prinzipiell nicht ausgeschlossen werden kann, dass solch massive Kurzschlussströme auch über den Erdleiter PE fließen. Das hätte im Beispiel der Fig.1 zur Folge, dass das elektrische Potential der über den Erdleiter PE geerdeten Fahrzeugkarosserie gegenüber Erde angehoben werden würde und personengefährdende Berührspannungen an der Fahrzeugkarosserie entstehen könnten.

Diese Problematik tritt grundsätzlich bei jeder trafolosen Umrichtertopologie mit einem AC-Leistungsteil 7 mit Halbleiterschaltern S1, ..., Sn und parallel dazu geschalteten Freilaufdioden D1, ..., D4 auf und ist nicht an die in Fig.1 gezeigte Umrichtertopologie oder an eine bestimmte Anwendung, wie in einem Ladegerät eines Elektrofahrzeugs, gebunden. Diese Problematik ist auch einer der Gründe, warum bisher keine trafolosen Umrichter 1 für derartige Anwendungen eingesetzt wurden.

Oftmals ist in einem Umrichter 1 auf der DC-Seite zwischen dem DC-Anschluss 3 und dem Gleichspannungszwischenkreis 6 als DC-seitige Schaltungskomponente 17 ein DC/DC-Wandler 12 vorgesehen, um die DC-Spannung V_{DC} am DC-Anschluss 3 auf die Zwischenkreisspannung V_{ZK} zu wandeln (üblicherweise hochzusetzen), oder umgekehrt die Zwischenkreisspannung V_{ZK} auf die benötigte DC-Spannung V_{DC} am DC-Anschluss 3 zu wandeln (üblicherweise tiefzusetzen). Der DC/DC-Wandler 12 ist daher oftmals als kombinierter Hoch-/Tiefsetzsteller ("Buck-Boost-Converter") ausgeführt, wie im Ausführungsbeispiel der Fig. 2. Ein DC/DC-Wandler 12 als DC-seitige Schaltungskomponente 17 weist in der Regel ein DC-Leistungsteil 13 mit Halbleiterschaltern S5, S6 und Freilaufdioden D5, D6, beispielsweise in Form einer Halbbrücke, auf. Die Halbleiterschalter S5, S6 des DC-Leistungsteils 13 werden auch durch Steuersignale SS5, SS6 von der Steuereinheit 11 angesteuert und zur Spannungswandlung kontrolliert mit einer vorgegebenen Schaltfrequenz (typischerweise in der Größenordnung von 1kHz bis 100kHz) geöffnet und geschlossen.

Auch bei einem Umrichter 1 mit einem solchen DC-seitigen DC/DC-Wandler 12 wie in Fig.2 dargestellt, treten im Falle eines Erdschlussfehlers die gleichen Probleme auf. Bei Erdschlussfehler an der Leitung L2 könnte sich der Erdfehlerstromkreis über die Freilaufdiode D1 im AC-Leistungsteil 7, die negative Verbindungsleitung V-, die negative DC-Leitung L2 und einen Erdleiter PE ausbilden. Im Erdschlussfehlerfall kann damit zusätzlich auch der DC-Leistungsteil 13 beschädigt oder zerstört werden. Die Erdfehlerproblematik beim trafolosen Umrichter 1 ist daher auch unabhängig von Vorhandensein eines DC-seitigen DC/DC-Wandlers 12 und auch von dessen Schaltungstopologie. Das gleiche gilt auch für andere DC-seitigen Schaltungskomponenten 17.

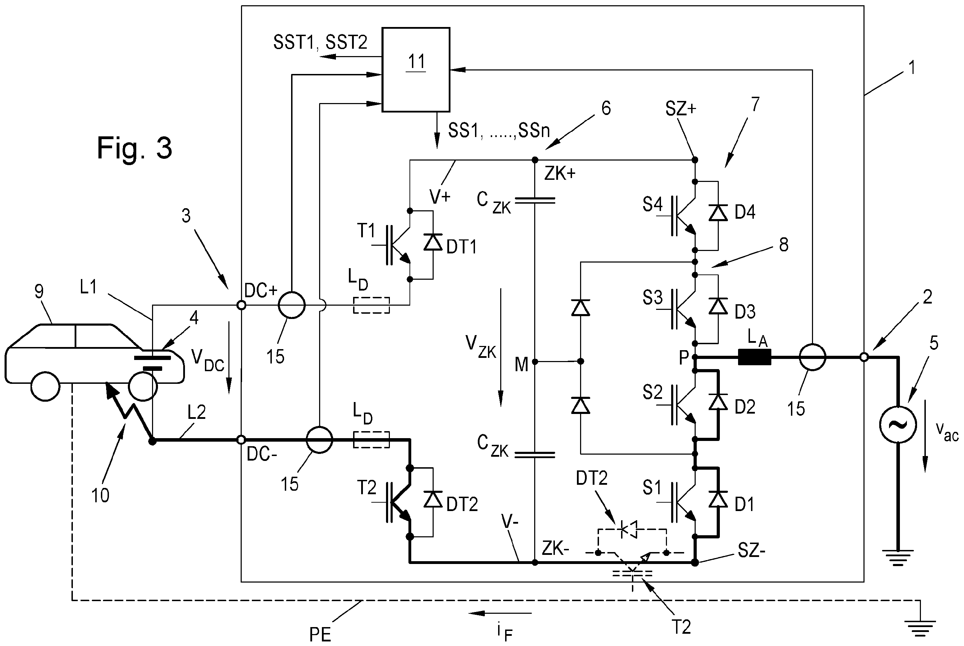

Um den trafolosen Umrichter 1 gegen Erdschlussfehler 10 zu schützen, ist erfindungsgemäß in der positiven Verbindungsleitung V+ des Umrichters 1 und/oder in der negativen Verbindungsleitung V- des Umrichters 1 ein weiterer unidirektional leitender Halbleiterschalter T1, T2 vorgesehen, wie in Fig.3 dargestellt. In der Ausführung nach Fig.3 sind in beiden Verbindungsleitungen V+, V- jeweils ein weiterer unidirektional leitender Halbleiterschalter T1, T2, in dieser Ausführung in Form von Transistoren, vorgesehen. Der weitere unidirektional leitende Halbleiterschalter T1, T2 unterbricht die jeweilige Verbindungsleitung V+, V- bei offenem weiteren Halbleiterschalter T1, T2 und schaltet die jeweilige Verbindungleitung V+, V- bei geschlossenem weiteren Halbleiterschalter T1, T2 in einer vorgesehenen Stromflussrichtung leitend durch. In einer der leitenden Stromflussrichtung entgegengensetzten Stromflussrichtung ist der weitere unidirektional leitende Halbleiterschalter T1, T2 jedoch nicht leitend. Der weitere unidirektional leitende Halbleiterschalter T1, T2 ist damit in Serie in die jeweilige Verbindungleitung V+, V-geschaltet.

Im Idealfall sperrt der weitere unidirektional leitende Halbleiterschalter T1, T2 im geschlossenen Zustand in der der leitenden Stromflussrichtung entgegengensetzten Stromflussrichtung. Ein Beispiel hierfür ist ein sperrfähiger Transistor, der in der der leitenden Stromflussrichtung entgegengensetzten Stromflussrichtung sperrt. Es kann aber auch sein, dass der weitere unidirektional leitende Halbleiterschalter T1, T2 in der der leitenden Stromflussrichtung entgegengensetzten Stromflussrichtung gar nicht betrieben werden darf, weil er durch eine solche Spannung oder einen solchen Strom beschädigt oder zerstört werden kann. Auch in diesem Fall ist der Halbleiterschalter T1, T2 im Sinne der Erfindung nur unidirektional leitend.

Als unidirektional leitender Halbleiterschalter T1, T2 wird vorzugsweise ein Transistor (MOSFET oder IGBT) eingesetzt. Ein auf leitend geschalteter (geschlossener) Transistor kann einen vorgegebenen maximalen Nennstrom in einer bestimmten Stromflussrichtung, der sogenannten Vorwärtsrichtung, leiten und es kann bei gesperrtem (offenem) Transistor eine vorgegebene maximale Nennspannung in dieser Vorwärtsrichtung angelegt und mittels des Transistors unterbrochen werden. In der entgegengesetzten Stromflussrichtung (Rückwärtsrichtung) kann ein Transistor je nach Typ zwar eine bestimmte Rückwärtsspannung (IBGT) oder einen gewissen Rückwärtsstrom (MOSFET) ertragen, nur ist diese tragbare Rückwärtsspannung bzw. Rückwärtsstrom deutlich kleiner als die gewünschte oder benötigte Nennspannung bzw. der Nennstrom. Wird die Rückwärtsspannung oder der Rückwärtsstrom bei geschlossenem Transistor zu groß, führt das zur Zerstörung des Transistors. Man spricht auch davon, dass der Transistor entgegen der vorgesehenen Stromflussrichtung sperrt und meint damit, dass nicht die Nennspannung als Rückwärtsspannung angelegt werden kann oder dass als Rückwärtsstrom nicht der Nennstrom fließen darf. Ein auf leitend geschalteter (geschlossener) Transistor ist damit nur in einer Stromflussrichtung zum Schalten eines vorgesehenen elektrischen Stromes bzw. einer vorgesehenen Spannung einsetzbar, in die entgegengesetzte Stromflussrichtung hingegen nicht, weil das den Transistor zerstören würde. Ein Transistor ist damit ein Beispiel eines unidirektional leitenden Halbleiterschalters im Sinne der Erfindung.

Parallel zum weiteren unidirektional leitenden Halbleiterschalter T1, T2 ist ein unidirektionales Schaltelement DT1, DT2, vorzugsweise ein passives Schaltelement wie eine Diode, geschaltet. Das unidirektionale Schaltelement DT1, DT2 könnte aber auch ein aktives Schaltelement sein, das beispielsweise zum Schalten von der Steuereinheit 11 angesteuert wird. Das unidirektionale Schaltelement DT1, DT2 ermöglicht einen elektrischen Stromfluss in einer Richtung und sperrt einen elektrischen Stromfluss in die andere Richtung. Im Falle einer Diode als unidirektionales Schaltelement DT1, DT2 erfolgt das selbsttätig. Das unidirektionale Schaltelement DT1, DT2 überbrückt damit den zugehörigen Halbleiterschalter T1, T2 in einer Stromflussrichtung.

Die leitende Stromflussrichtung des unidirektional leitenden Halbleiterschalters T1, T2 ist entgegengesetzt zur leitenden Stromflussrichtung des zugehörigen unidirektionalen Schaltelements DT1, DT2.

Das unidirektionale Schaltelement DT1 in der positiven Verbindungsleitung V+ sperrt den Stromfluss vom AC-Anschluss 2 des Umrichters 1 zum DC-Anschluss 3 des Umrichters 1, womit die leitende Stromflussrichtung des zugehörigen unidirektional leitenden Halbleiterschalters T1 entgegengesetzt, also in Richtung vom AC-Anschluss 2 zum DC-Anschluss 3 ist. Der auf leitend geschaltete (geschlossene) unidirektional leitende Halbleiterschalter T1 in der positiven Verbindungsleitung V+ ermöglicht damit einen Stromfluss vom AC-Anschluss 2 zum DC-Anschluss 3, und stört in Kombination mit dem zugehörigen unidirektionalen Schaltelement DT1 den Normalbetrieb des Umrichters 1 daher nicht. Das unidirektionale Schaltelement DT2 in der negativen Verbindungsleitung V- sperrt den Stromfluss vom DC-Anschluss 3 des Umrichters 1 zum AC-Anschluss 2 des Umrichters 1, womit die leitende Stromflussrichtung des zugehörigen unidirektional leitenden Halbleiterschalters T2 entgegengesetzt, also in Richtung vom DC-Anschluss 2 zum AC-Anschluss 3 ist. Der auf leitend geschaltete (geschlossene) unidirektional leitende Halbleiterschalter T2 in der negativen Verbindungsleitung V- ermöglicht damit einen Stromfluss vom DC-Anschluss 3 zum AC-Anschluss 2, und stört in Kombination mit dem zugehörigen unidirektionale Schaltelement DT2 den Normalbetrieb des Umrichters 1 daher nicht.

Zusätzlich wird ein im Umrichter 1 fließender elektrischer Strom und/oder eine elektrische Spannung an einer Komponente des Umrichters 1 erfasst. Das kann ein fließender DC-Strom in einer DC-Strom führenden Leitung oder ein DC-Strom in einem DC-Strom führenden Bauteil des Umrichters 1 sein oder ein fließender AC-Strom in einer AC-Strom führenden Leitung oder in einem AC-Strom führenden Bauteil des Umrichters 1. Das umfasst insbesondere auch einen elektrischen Strom der aus dem Umrichter 1 oder in den Umrichter 1 fließt. Das umfasst auch eine Spannungsmessung gegen Erde, beispielsweise zwischen einer der Verbindungsleitungen V+, V- und Erde, wofür der Umrichter 1 beispielsweise geerdet ist. Ebenso soll damit eine elektrische Spannung umfasst sein, die am DC-Anschluss 3 oder am AC-Anschluss 2 anliegt. Hierfür kann zumindest ein Stromsensor 15 (wie in Fig.3) und/oder zumindest ein Spannungssensor 16 (wie in Fig.2) vorgesehen sein. Anhand des erfassten fließenden Stromes (AC und/oder DC) und/oder der erfassten Spannung (AC und/oder DC) kann ein Erdschlussfehler erkannt werden. Es wird natürlich ein solcher Strom und/oder eine solche Spannung erfasst, der einen zuverlässigen Rückschluss auf einen Erdschlussfehler erlaubt. Ein Stromsensor 15 und/oder ein Spannungssensor 16 kann mit der Steuereinheit 11 verbunden sein, die den erfassten elektrischen Strom und/oder die erfasste elektrische Spannung zum Erkennen eines Erdschlussfehlers auswertet. Wird anhand des erfassten elektrischen Stromes und/oder der erfassten elektrischen Spannung ein Erdschlussfehler erkannt, wird der zumindest eine weitere Halbleiterschalter T1, T2 von der Steuereinheit 11 durch ein entsprechendes Steuersignal SST1, SST2 permanent geöffnet.

"Permanent" bedeutet in diesem Zusammenhang, dass der weitere Halbleiterschalter T1, T2 zumindest solange geöffnet bleibt, dass sich kein signifikanter Stromanstieg eines Erdfehlerstromes i_{F} einstellen kann. Beispielsweise darf sich kein Stromanstieg über einen vorgegebenen Grenzwert des Erdfehlerstromes einstellen. "Permanent" ist damit zeitlich zumindest deutlich länger als die üblichen Schaltzeiten (1kHz bis 100kHz Schaltfrequenz) der Halbleiterschalter S1, ..., S4, S5, S6 eines AC-Leistungsteils 7 oder DC-Leistungsteils 12. Das wird in der Regel auch länger sein, als eine halbe Periode oder eine ganze Periode einer AC-Spannung v_{AC} des AC-Netzes 5, in der Regel ein Vielfaches davon. Der weitere Halbleiterschalter T1, T2 kann auch so lange geöffnet bleiben, solange ein Trennelement 14 zum Öffnen benötigt. Ein allfällig vorhandenes offenes Trennelement 14 würde natürlich den Erdfehlerstromkreis unterbrechen. In einer vorteilhaften Ausführung bedeutet "permanent" damit mindestens so lange wie ein Trennelement 14 zum Öffnen benötigt.

Nach oben hin kann "permanent" bedeuten, dass der zumindest eine weitere Halbleiterschalter T1, T2 von der Steuereinheit 11 bis zur Klärung des Erdschlussfehlers geöffnet wird. Die Klärung des Erdschlussfehlers kann beispielsweise durch Wartungspersonal erfolgen.

Es kann auch vorgesehen sein, dass der weitere Halbleiterschalter T1, T2 für eine hinreichend lange Zeitdauer geöffnet bleibt, sodass sich kein signifikanter Erdfehlerstrom ausbilden kann, und dass dann der weitere Halbleiterschalter T1, T2 wieder geschlossen wird. Besteht der Erdschlussfehler dann immer noch, würde der weitere Halbleiterschalter T1, T2 erneut geöffnet werden. Das kann für eine vorgegebenen Anzahl, beispielsweise dreimal, wiederholt werden. Besteht dann der Erdschlussfehler immer noch, kann der Umrichter 1 in einen Fehlermodus übergehen, der eine Klärung des Erdschlussfehler, beispielsweise durch Wartungspersonal, erfordert. Bis zur Klärung kann der Umrichter 1 nicht mehr in Betrieb genommen werden. Dasselbe lässt sich auch mit mehreren Zyklen des Öffnens eines Trennelementes 14 realisieren.

Die Auswertung des erfassten elektrischen Stromes oder einer erfassten elektrischen Spannung in der Steuereinheit 11 kann so erfolgen, dass der Wert des erfassten Stromes oder der erfassten elektrischen Spannung mit einem Sollwert des Stromes oder der Spannung, der der Steuereinheit 11 zum Steuern des Umrichters 1 vorgegeben ist, vergleicht. Weicht der erfasste Strom oder die erfasst Spannung zu weit vom Sollwert ab, kann ein Erdschlussfehler vermutet werden. Hierfür kann beispielsweise ein zulässiger Strombereich oder Spannungsbereich vorgegeben sein, um den der erfasste Strom oder die erfasste Spannung vom Sollwert maximal abweichen darf. Ein Überstrom oder eine Überspannung innerhalb des Umrichters 1 ohne Vorhandensein eines Erdschlussfehlers könnte von dieser Auswertungsmethode jedoch möglicherweise nicht unterschieden werden.

Für eine sicherere Erkennung eines Erdschlussfehlers, können daher auch mehrere Strommessungen und/oder Spannungsmessungen korreliert werden, um festzustellen, ob ein Erdschlussfehler vorliegt, also insbesondere kein interner Kurzschluss, sondern ein Kurzschluss, der die Erdleitung PE miteinbezieht, sodass ein Erdfehlerstrom über die Erdleitung PE fließt. Hierzu können natürlich auch mehrere Stromsensoren 15 und/oder Spannungssensoren vorgesehen sein.

In einer Ausführung wie in Fig.3 wäre dies beispielsweise ein Vergleich der Strommessungen des am positiven DC-Anschlusspol DC+ und am negativen DC-Anschlusspol DC- fließenden Stromes. Sobald beide Messungen unterschiedliche Beträge aufweisen, kann auf einen Erdfehlerstrom, also auf einen Erdfehler, geschlossen werden. Üblich ist es außerdem innerhalb des Umrichters 1, beispielsweise am AC-Anschluss 2, einen spezialisierten Differenzstromsensor (sogenannter RCMU: Residual Current Monitoring Unit) anzubringen, der alle AC-Phasen einschließt. Im Normalfall ist die Summe der Ströme der AC-Phasen Null. Im Erdfehlerfall fließt ein Strom über Erde PE an der RCMU vorbei. Die RCMU misst diesen Differenzstrom und meldet diesen an die Steuereinheit 11, die auf einen Erdschlussfehler schließen kann.

Oftmals werden Treiberbausteine für die Halbleiterschalter S1, ..., S4, S5, S6 eines AC-Leistungsteils 7 oder DC-Leistungsteils 12 mit integrierter Sättigungsstromüberwachung verwendet. Die Sättigungsstromüberwachung überwacht beispielsweise im eingeschalteten Zustand des Halbleiterschalters die Spannung zwischen einem Kollektor und Emitter eines Transistors als Halbleiterschalter, weil diese Spannung ein Maß für den Sättigungsstrom ist. Ist diese Spannung zu hoch kann auf einen zu hohen Stromfluss und damit auf einen Erdschlussfehler geschlossen werden. Der Treiberbaustein hat auch eine Signalleitung, mit das an eine andere Einheit, wie die Steuereinheit 11, signalisiert werden kann. Eine solche Sättigungsstromüberwachung eines Treiberbausteins kann daher auch als Stromsensor 15 verwendet werden und hätte den Vorteil, dass diese sehr schnell ist.

Diese Messung durch einen Stromsensor 15 und/oder einen Spannungssensor und die Auswertung eines gemessenen elektrischen Stromes und/oder einer gemessenen elektrischen Spannung kann in der Steuereinheit 11 sehr schnell erfolgen. Die Steuereinheit 11 arbeitet üblicherweise in Zeitschritten in der Größenordnung von 10 Mikrosekunden bis 100 Mikrosekunden. Ein Erdfehler kann damit sehr schnell erkannt werden.

Damit ist es auch möglich, dass die Steuereinheit 11 den zumindest einen weiteren Halbleiterschalter T1, T2 innerhalb einer kurzen Zeitspanne, typischerweise in der Größenordnung von 10 Mikrosekunden bis 100 Mikrosekunden, permanent öffnet.

In einem 50 Hz AC-Netz 5 dauert eine Halbwelle der AC-Spannung v_{AC} 10 Millisekunden, also in etwa um einen Faktor Hundert bis Tausend länger, als die Erkennung eines Erdfehlers und das Öffnen des zumindest einen weiteren Halbleiterschalters T1, T2 dauert. Damit kann der Erdschlussfehler keinen vom AC-Netz 5 getriebenen nennenswerten Stromanstieg bewirken. Der Erdfehlerstromkreis wird damit unterbrochen, bevor signifikante Erdfehlerströme auftreten können. Damit kann der trafolose Umrichter 1 wirkungsvoll vor den Auswirkungen von Erdschlussfehlern geschützt werden.

Es wäre aber auch denkbar, insbesondere auf der DC-Seite, und insbesondere in der positiven Verbindungsleitung V+ und der negativen Verbindungsleitung V-, bedarfsweise zusätzliche Induktivitäten L_{D} (in Fig.3 angedeutet) anzuordnen, um die Stromanstiegsgeschwindigkeit im Falle eines Erdschlussfehlers zu begrenzen, sodass die Steuereinheit 11 hinreichend Zeit hat, einen Erdschlussfehler zu erkennen und darauf mit dem permanenten Öffnen des weiteren Halbleiterschalters T1, T2 zu reagieren.

In der Ausgestaltung der Fig.3 wird wieder ein satter spontaner Erdschlussfehler zu einer geerdeten Fahrzeugkarosserie angenommen. Der weitere unidirektional leitende Halbleiterschalter T2 in der negativen Verbindungsleitung V- ist geschlossen, sodass sich ein Erdfehlerstromkreis ausbildet, wie oben beschrieben. Das parallel zum weiteren Halbleiterschalter T2 geschaltete unidirektionale Schaltelement DT2 ist überbrückt und wirkungslos. Wird der Erdfehler erkannt, wird der weitere unidirektional leitende Halbleiterschalter T2 permanent geöffnet. Durch das Öffnen des weiteren unidirektional leitenden Halbleiterschalters wird das parallel geschaltete unidirektionale Schaltelement DT2 aktiviert und das unidirektionale Schaltelement DT2 sperrt die negative Verbindungsleitung V- in Richtung des AC-Anschlusses 3. Damit kann kein von der negativen Halbwelle der AC-Spannung v_{AC} getriebener Erdfehlerstrom i_{F} fließen und der Erdfehlerstromkreis über die negative Leitung L2 und die negative Verbindungsleitung V- ist unterbrochen.

In der Ausgestaltung der Fig.3 ist ein weiterer Halbleiterschalter T1 mit parallel dazu geschaltetem unidirektionalen Schaltelement DT2 auch in der positiven Verbindungsleitung V+ vorgesehen. Damit wäre der Umrichter 1 auch wirkungsvoll vor Erdschlussfehlern an der positiven Leitung L1 geschützt.

Im Normalbetrieb des Umrichters 1 ist ein weiterer unidirektional leitender Halbleiterschalter T1, T2 dauerhaft auf leitend geschaltet und das zugehörige parallel geschaltete unidirektionale Schaltelement DT1, DT2 ist für die Sperrrichtung des unidirektionalen Schaltelementes DT1, DT2 (entgegen der leitenden Stromflussrichtung des weiteren unidirektional leitenden Halbleiterschalters T1, T2) überbrückt und somit wirkungslos. Nur im Falle eines Erdschlussfehlers 10 wird der weitere unidirektional leitende Halbleiterschalter T1, T2 permanent geöffnet, womit das zugehörige parallel geschaltete unidirektionale Schaltelement DT1, DT2 aktiviert wird, sodass der Erdfehlerstromkreis unterbrochen wird.

Der weitere Halbleiterschalter T1, T2 mit dem jeweiligen parallel dazu geschalteten unidirektionalen Schaltelement DT1, DT2 kann grundsätzlich an jeder Stelle der positiven Verbindungsleitung V+ und/oder der negativen Verbindungsleitung V- vorgesehen sein. Vorteilhaft ist es jedoch, wenn der weitere Halbleiterschalter T1, T2 mit dem jeweiligen parallel dazu geschalteten unidirektionalen Schaltelement DT1, DT2 so nah wie möglich am Schaltzweig 8 des AC-Leistungsteils 7 angeordnet wird. Der Grund hierfür ist, dass alle Schaltungskomponenten zwischen dem weiteren Halbleiterschalter T1, T2 mit dem jeweiligen parallel dazu geschalteten unidirektionalen Schaltelement DT1, DT2 und dem positiven DC-Anschlusspol DC+ oder dem negativen DC-Anschlusspol DC- im Erdschlussfehlerfall vom AC-Netz 5 getrennt werden und damit vor direkten Einflüssen aus dem AC-Netz 5 geschützt sind. Eine vorteilhafte Position für den weiteren Halbleiterschalter T1, T2 mit dem jeweiligen parallel dazu geschalteten unidirektionalen Schaltelement DT1, DT2 ist damit in der Leitung zwischen dem positiven Zwischenkreisanschlusspol ZK+ und dem positiven Schaltzweiganschlusspol SZ+ oder zwischen dem negativen Zwischenkreisanschlusspol ZK- und dem negativen Schaltzweiganschlusspol SZ- (wie in Fig.3 gestrichelt angedeutet).

Bei Vorliegen gewisser Spannungsverhältnisse im Falle eines Erdschlussfehlers 10, könnte ein Erdfehlerstromkreis auch über den AC-Anschluss 2, den positiven Freilaufdioden (in Fig.1 die Dioden D3, D4 oder in Fig.2 die Diode D4), dem Gleichspannungszwischenkreis 6 und der negativen Verbindungsleitung V- zwischen dem negativen Zwischenkreisanschlusspol ZK- und dem negativen DC-Anschlusspol DC- ausbilden. Ein solcher Erdfehlerstromkreis könnte sich in analoger Weise auch über den Gleichspannungszwischenkreis 6 und die positive Verbindungsleitung V+ ausbilden. Wird der weitere unidirektional leitende Halbleiterschalter T1, T2 in der Leitung zwischen dem positiven Zwischenkreisanschlusspol ZK+ und dem positiven Schaltzweiganschlusspol SZ+ oder zwischen dem negativen Zwischenkreisanschlusspol ZK- und dem negativen Schaltzweiganschlusspol SZ- geschaltet, dann könnten mit der Erfindung auch solche, über den Gleichspannungszwischenkreis 6 verlaufende Erdfehlerstromkreis unterbrochen werden.

Grundsätzlich wäre es auch möglich den weiteren unidirektional leitenden Halbleiterschalter T1, T2 mit parallelem unidirektionalem Schaltelement DT1, DT2 auch an anderen Stellen des Erdfehlerstromkreises anzuordnen, um den Erdfehlerstromkreis im Falle eines Erdschlussfehler 10 zu unterbrechen. Beispielsweise könnte der weitere Halbleiterschalter T1, T2 in einen Schaltzweig 8 des AC-Leistungsteils 7 in Serie zu den Halbleiterschaltern S1, ..., Sn geschaltet sein oder auch zwischen den Pol P eines Schaltzweigs 8 und dem AC-Anschluss 2. Auch an dieser Stelle könnte der weitere Halbleiterschalter T1, T2 mit parallelem unidirektionalem Schaltelement DT1, DT2 einen Erdfehlerstromkreis unterbrechen. Obwohl das grundsätzlich möglich wäre, hätte das aber auch Nachteile. Um den AC-Leistungsteil 7 kompakt zu bauen wird man eher davon absehen, dort einen zusätzlichen Halbleiterschalter T1, T2 mit parallelem unidirektionalem Schaltelement DT1, DT2 anzuordnen. In der Leitung zwischen Pol P und AC-Anschluss 5 ändert sich die Polarität der Spannung ständig, weshalb der weitere unidirektional leitende Halbleiterschalter T1, T2 mit parallelem unidirektionalem Schaltelement DT1, DT2 zwingend in Abhängigkeit von der Polarität der AC-Spannung v_{AC} geschaltet werden müsste, was zusätzlichen Aufwand verursachen würde.

Zusätzlich zum permanenten Öffnen des zumindest einen weiteren Halbleiterschalters T1, T2 kann im Falle eines Erdschlussfehlers natürlich am Umrichter 1 auch noch eine andere Maßnahme gesetzt werden, die auch viel langsamer ausgeführt werden könnte. Beispielsweise könnte ein Trennelement 14 (auf der AC oder der DC-Seite) des Umrichters 1 geöffnet werden. Gleichsam könnten auch die Halbleiterschalter S1, ..., Sn des AC-Leistungsteils 8 und/oder eines DC-Leistungsteils 13 geöffnet werden, beispielsweise um den Umrichter 1 in einen definierten Zustand zu bringen.

In einer besonders vorteilhaften Ausgestaltung ist der zumindest eine unidirektional leitende Halbleiterschalter T1, T2 in der positiven oder negativen Verbindungsleitung V+, V- Teil einer DC-seitigen Schaltungskomponente 17, wie eines DC/DC-Wandlers 12 eines DC-Leistungsteils 13 des Umrichters 1 oder eines aktiven DC-Filters mit Halbleiterschaltern. Das wird anhand der Fig.2 am Beispiel eines DC/DC-Wandlers 12 erläutert.

In Fig.2 ist, wie oben beschreiben, zwischen dem DC-Anschluss 2 und dem Gleichspannungszwischenkreis 6 ein DC/DC-Wandler 12 vorgesehen, dessen DC-Leistungsteil 13 Halbleiterschalter S5, S6 in einem Schaltzweig aufweist. Es ist ersichtlich, dass der Halbleiterschalter S6 mit paralleler Freilaufdiode D6 des DC/DC-Wandlers 12 in der positiven Verbindungsleitung V+ angeordnet ist. Dieser Halbleiterschalter S6 wird im normalen Betrieb des Umrichters 1 mit einer Schaltfrequenz getaktet geöffnet und geschlossen. Im Falle eines Erdschlussfehlers an der positiven Verbindungsleitung V+ kann dieser Halbleiterschalter S6 als weiterer unidirektional leitender Halbleiterschalter T1 und die Freilaufdiode D6 als unidirektionale Schaltelement DT1 zum Schutz des Umrichters 1 vor Erdfehlern genutzt werden. Wird ein Erdschlussfehler erkannt, wird der Halbleiterschalter S6 (T1) von der Steuereinheit 11 permanent geöffnet, womit die Diode D6 (DT1) aktiviert wird und die Ausbildung eines Erdfehlerstromkreises über die positive Verbindungsleitung V+ unterbunden ist. Dieses permanente Öffnen des unidirektional leitenden Halbleiterschalters S6 (T1) ist nicht zu vergleichen mit dem üblichen Öffnen mit der Schaltfrequenz, weil das permanente Öffnen eine wesentlich längere durchgehende Zeitdauer dauert.

In der Ausführung der Fig.2 wäre die negative Verbindungsleitung V- nicht gegen Erdschlussfehler geschützt und es könnte sich im Falle eines Erdschlussfehlers ein Erdfehlerstromkreis über die negative Verbindungsleitung V- ausbilden. Um das zu verhindern, könnte in der negativen Verbindungsleitung V- ein weiterer unidirektional leitender Halbleiterschalter T2 mit parallelem unidirektionale Schaltelement DT2 vorgesehen sein (beispielsweise wie in Fig.3). In einer besonders vorteilhaften Ausgestaltung könnte auch in der negativen Verbindungsleitung V- ein DC/DC-Wandler, analog zum DC/DC-Wandler der Fig.2, angeordnet sein. Dieser weitere DC/DC-Wandler wäre praktisch gespiegelt zum in Fig.2 gezeigten DC/DC-Wandler. Ein Halbleiterschalter dieses weiteren DC/DC-Wandlers könnte dann im Erdschlussfehlerfall als weiterer unidirektional leitender Halbleiterschalter T2 verwendet werden und die Freilaufdiode dieses Halbleiterschalters als unidirektionales Schaltelement DT2. Dieser zusätzliche unidirektional leitende Halbleiterschalter T2 ist im normalen Betrieb ohne Erdschlussfehler immer geschlossen und leitend. Die Leitverluste des zusätzlichen Halbleiterschalters T2 zu minimieren kann daher hinsichtlich des Gesamtwirkungsgrades vorteilhaft sein. Das gilt natürlich in gleicher Weise auch für einen zusätzlichen Halbleiterschalter T1 in der positiven Verbindungsleitung V+.

In bestimmten Fällen können einzelne Leitungen (DC+, DC-) besonders isoliert ausgeführt sein. Damit kann bereits ein ausreichender Schutz gegen Erdfehlerauswirkungen gegeben sein, der die Absicherung ebendieser Leitung mit erfindungsgemäßen Mitteln nicht mehr erforderlich macht. In diesem Fall würden nur die übrigen Leitungen mittels weiterer Halbleiterschalter mit parallelem unidirektionalem Schaltelement geschützt werden.

Jedes beschriebene Halbleiterschaltelement S1, ..., S6, T1, T2 ist vorzugsweise als Transistor ausgeführt, beispielsweise als IGBT oder MOSFET Transistor.

Die Steuereinheit 11 ist vorzugsweise eine mikroprozessorbasierte Hardware, auf der entsprechende Steuersoftware installiert ist und ausgeführt wird. Die Steuereinheit 11 kann auch als integrierte Schaltung ausgeführt sein, wie beispielsweise als anwendungsspezifische integrierte Schaltung (ASIC) oder Field Programmable Gate Array (FPGA).

## Patentansprüche

1. Trafoloser Umrichter mit einem DC-Anschluss (3) und einem AC-Anschluss (2), wobei der AC-Anschluss (2) mit einem AC-Leistungsteil (7) des Umrichters (1) verbunden ist, indem der AC-Leistungsteil (7) zumindest einen Schaltzweig (8) mit zumindest zwei in Serie geschalteten Halbleiterschaltern (S1, S2, S3, S4) mit jeweils paralleler Freilaufdiode (D1, D2, D3, D4) aufweist, zwischen denen ein elektrischer Pol (P) gebildet ist, der mit dem AC-Anschluss (2) verbunden ist, wobei im Umrichter (1) ein Gleichspannungszwischenkreis (6) mit zumindest einen Zwischenkreiskondensator (C_{ZK}) vorgesehen ist und der Gleichspannungszwischenkreis (6) mit dem AC-Leistungsteil (7) und dem DC-Anschluss (3) verbunden ist, **dadurch gekennzeichnet, dass** in einer ersten positiven Verbindungsleitung (V+) des Umrichters (1), die einen positiven Zwischenkreisanschlusspol (ZK+) des Gleichspannungszwischenkreises (6) mit einem positiven DC-Anschlusspol (DC+) des DC-Anschlusses (3) verbindet, ein weiterer unidirektional leitender Halbleiterschalter (T1) vorgesehen ist, der die positive Verbindungleitung (V+) bei offenem weiteren unidirektional leitenden Halbleiterschalter (T1) unterbricht und bei geschlossenem weiteren unidirektional leitenden Halbleiterschalter (T1) in einer ersten Stromflussrichtung vom AC-Anschluss (2) zum DC-Anschluss (3) leitend durchschaltet und entgegen der ersten Stromflussrichtung sperrt, wobei parallel zum weiteren Halbleiterschalter (T1) ein unidirektionales Schaltelement (DT1) geschaltet ist, das in der ersten Stromflussrichtung sperrt und entgegen der ersten Stromflussrichtung leitet, **und/oder** in einer negativen Verbindungsleitung (V-) des Umrichters (1), die einen negativen Zwischenkreisanschlusspol (ZK-) des Gleichspannungszwischenkreises (6) mit einem negativen DC-Anschlusspol (DC-) des DC-Anschlusses (3) verbindet, ein weiterer unidirektional leitender Halbleiterschalter (T2) vorgesehen ist, der die negative Verbindungleitung (V-) bei offenem weiteren unidirektional leitenden Halbleiterschalter (T2) unterbricht und bei geschlossenem weiteren unidirektional leitenden Halbleiterschalter (T2) in einer zweiten Stromflussrichtung vom DC-Anschluss (3) zum AC-Anschluss (2) leitend durchschaltet und entgegen der zweiten Stromflussrichtung sperrt, wobei parallel zum weiteren Halbleiterschalter (T2) ein unidirektionales Schaltelement (DT2) geschaltet ist, das in der zweiten Stromflussrichtung sperrt und entgegen der zweiten Stromflussrichtung leitet, **und dass** im Umrichter (1) ein Stromsensor (15) vorgesehen ist, der einen im Umrichter (1) fließenden elektrischen Strom erfasst und/oder ein Spannungssensor (16) vorgesehen ist, der eine an einer Komponente des Umrichters (1) anliegende elektrischen Spannung erfasst und im Umrichter (1) eine Steuereinheit (11) vorgesehen ist, die eingerichtet ist, anhand des erfassten elektrischen Stromes und/oder der erfassten elektrischen Spannung einen Erdschlussfehler (10) zu erkennen und die Steuereinheit (11) eingerichtet ist, den weiteren unidirektional leitenden Halbleiterschalter (T1) in der positiven Verbindungsleitung (V+) und/oder den weiteren unidirektional leitenden Halbleiterschalter (T2) in der negativen Verbindungsleitung (V-) im Falle eines erkannten Erdschlussfehlers (10) permanent zu öffnen.

2. Trafoloser Umrichter nach Anspruch 1, **dadurch gekennzeichnet, dass** in der positiven Verbindungsleitung (V+) und/oder in der negativen Verbindungsleitung (V-) eine Schaltungskomponente (17), vorzugsweise ein DC/DC-Wandler (12), geschaltet ist, wobei die Schaltungskomponente (17), vorzugsweise der DC/DC-Wandler (12), zumindest einen Halbleiterschalter (S5, S6) mit einer parallel dazu geschalteten Freilaufdiode (D5, D6) umfasst, die als weiterer unidirektional leitender Halbleiterschalter (T1, T2) mit parallel geschaltetem unidirektionalen Schaltelement (DT1, DT2) verwendbar sind, **und dass** die Steuereinheit (11) den zumindest einen Halbleiterschalter (S5, S6) der Schaltungskomponente (17), vorzugsweise des DC/DC-Wandlers (12), im Falle eines erkannten Erdschlussfehlers (10) permanent öffnet und die jeweilige Freilaufdiode (D5, D6) den Stromfluss sperrt.

3. Verfahren zum Schützen eines trafolosen Umrichters (1) vor den Auswirkungen eines Erdschlussfehlers (10), wobei der Umrichter (1) einen DC-Anschluss (3) und einen AC-Anschluss (2) aufweist und der AC-Anschluss (2) mit einem AC-Leistungsteil (7) des Umrichters (1) verbunden wird, indem der AC-Leistungsteil (7) zumindest einen Schaltzweig (8) mit zumindest zwei in Serie geschalteten Halbleiterschaltern (S1, S2, S3, S4) mit jeweils paralleler Freilaufdiode (D1, D2, D3, D4) aufweist, zwischen denen ein elektrischer Pol (P) gebildet ist, der mit dem AC-Anschluss (2) verbunden wird, wobei der Umrichter (1) ferner einen Gleichspannungszwischenkreis (6) mit zumindest einem Zwischenkreiskondensator (C_{ZK}) umfasst und der Gleichspannungszwischenkreis (6) mit dem AC-Leistungsteil (7) und dem DC-Anschluss (3) verbunden wird, **dadurch gekennzeichnet, dass** der Umrichter (1) einen in einer positiven Verbindungsleitung (V+) des Umrichters (1), die einen positiven Zwischenkreisanschlusspol (ZK+) des Gleichspannungszwischenkreises (6) mit einem positiven DC-Anschlusspol (DC+) des DC-Anschlusses (3) verbindet, angeordneten weiteren unidirektional leitenden Halbleiterschalter (T1) umfasst, der die positive Verbindungleitung (V+) bei offenem weiteren unidirektional leitenden Halbleiterschalter (T1) unterbricht und bei geschlossenem weiteren unidirektional leitenden Halbleiterschalter (T1) in einer ersten Stromflussrichtung vom AC-Anschluss (2) zum DC-Anschluss (3) leitend durchschaltet und entgegen der ersten Stromflussrichtung sperrt, und der Umrichter (1) ein unidirektionales Schaltelement (DT1) umfasst, das parallel zum weiteren unidirektional leitenden Halbleiterschalter (T1) geschaltet wird, und das unidirektionale Schaltelement (DT1) in der ersten Stromflussrichtung sperrt und entgegen der ersten Stromflussrichtung leitet, **und/oder** der Umrichter (1) einen in der negativen Verbindungsleitung (V-) des Umrichters (1), die einen negativen Zwischenkreisanschlusspol (ZK-) des Gleichspannungszwischenkreises (6) mit einem negativen DC-Anschlusspol (DC-) des DC-Anschlusses (3) verbindet, angeordneten weiteren unidirektional leitender Halbleiterschalter (T2) umfasst, der die negativen Verbindungleitung (V-) bei offenem weiteren unidirektional leitenden Halbleiterschalter (T2) unterbricht und bei geschlossenem weiteren unidirektional leitenden Halbleiterschalter (T2) in einer zweiten Stromflussrichtung vom DC-Anschluss (3) zum AC-Anschluss (2) leitend durchschaltet und entgegen der zweiten Stromflussrichtung sperrt, und der Umrichter (1) ein unidirektionales Schaltelement (DT2) umfasst, das parallel zum weiteren unidirektional leitenden Halbleiterschalter (T2) geschaltet wird, und das unidirektionale Schaltelement (DT2) in der zweiten Stromflussrichtung sperrt und entgegen der zweiten Stromflussrichtung leitet, **und dass** ein im Umrichter (1) fließender elektrischer Strom und/oder eine an einer Komponenten des Umrichters (1) anliegende elektrische Spannung erfasst wird und anhand des erfassten elektrischen Stromes und/oder der erfassten elektrischen Spannung ein Erdschlussfehler (10) erkannt wird und der weitere unidirektional leitende Halbleiterschalter (T1) in der positiven Verbindungsleitung (V+) und/oder der weitere unidirektional leitenden Halbleiterschalter (T2) in der negativen Verbindungsleitung (V-) im Falle eines erkannten Erdschlussfehlers (10) permanent geöffnet wird.

4. Verfahren nach Anspruch 3, **dadurch gekennzeichnet, dass** der permanent geöffnete weitere unidirektional leitende Halbleiterschalter (T1, T2) zumindest solange geöffnet wird, dass der Erdfehlerstrom (10) kleiner einem vorgegebenen Grenzwert bleibt.

5. Verfahren nach Anspruch 3, **dadurch gekennzeichnet, dass** der permanent geöffnete weitere unidirektional leitende Halbleiterschalter (T1, T2) zumindest länger als die Schaltzeiten der Halbleiterschalter (S1, S2, S3, S4) des AC-Leistungsteils (7) während des Betriebs des Umrichters (1) geöffnet bleibt.

6. Verfahren nach Anspruch 3, **dadurch gekennzeichnet, dass** der permanent geöffnete weitere unidirektional leitende Halbleiterschalter (T1, T2) zumindest länger als eine halbe Periode, vorzugsweise länger als eine ganze Periode, einer am AC-Anschluss (2) anliegenden AC-Spannung (v_{AC}) geöffnet bleibt.

7. Verfahren nach Anspruch 3, **dadurch gekennzeichnet, dass** der permanent geöffnete weitere unidirektional leitende Halbleiterschalter (T1, T2) zumindest solange geöffnet wird, solange es dauert, ein Trennelement (14) des Umrichters (1), das den Umrichter (1) von einem am AC-Anschluss (2) angeschlossenen AC-Netz (5) trennt, zu öffnen.

8. Verfahren nach einem der Ansprüche 3 bis 7, **dadurch gekennzeichnet, dass** der weitere unidirektional leitende Halbleiterschalter (T1, T2) nach einer vorgegebenen Zeitdauer wieder geschlossen wird und im Falle eines erneut erkannten Erdschlussfehlers (10) wieder permanent geöffnet wird, **und dass** das für eine vorgegebene Anzahl wiederholt wird und bei Erreichen der vorgegebenen Anzahl der Umrichter (1) in einen Fehlermodus überführt wird.
